# EUROPÄISCHE PATENTSCHRIFT

(11) **EP 3 006 752 B1**
(45) Veröffentlichungstag und Bekanntmachung des Hinweises auf die Patenterteilung: **04.07.2018**
(21) Anmeldenummer: 15002763.9
(22) Anmeldetag: 24.09.2015
(51) Int. Cl.: F16C 29/00, F16C 29/12

(54) **GLEITWAGEN MIT EINEM ELASTISCHEN ELEMENT**
SLIDING CARRIAGE HAVING AN ELASTIC ELEMENT
CHARIOT COULISSANT DOTE D'UN ELEMENT ELASTIQUE

(30) Priorität: 10.10.2014 DE 102014014789
(43) Veröffentlichungstag der Anmeldung: 13.04.2016
(73) Patentinhaber: Eccon GmbH, 6710 Nenzing (AT)
(72) Erfinder: Jenni, Martin, 6811 Göfis (AT)
(74) Vertreter: Riebling, Peter

(56) Entgegenhaltungen:
- WO-A2-2014/086653
- DE-A1- 10 340 672
- DE-A1-102011 006 745
- JP-A- H07 224 835
- US-A- 4 714 354

## Beschreibung

Die Erfindung betrifft einen Gleitwagen mit einem elastischen Element nach dem Oberbegriff des Patentanspruches 1.

Gleitwagen werden im Bereich der Antriebstechnik für wandelbare Dächer für z.B. die Beschattung von Innenräumen, der Witterungsschutz von Innenhofüberdachung oder beim Sportstättenbau eingesetzt. Dabei werden sowohl schienengeführte, als auch kabelgeführte Verfahrkonzepte, angetrieben mit hydraulischen und mechanischen Systemen verwirklicht. Speziell bei den kabelgeführten Systemen für großflächige Überdachungen gewinnen Gleitwagen immer mehr an Bedeutung.

Die technisch herausforderndste wandelbare Dachkonstruktion stellt das seilgeführte wandelbare Dach mit faltbarer Membran dar. Vor allem die zum Zentrum hin zu öffnende Variante bietet sich für Sportstätten und große Stadien an, da an diesem zentralen Knoten Medienequipment angehängt werden kann.

Die Membrane ist bei geöffnetem Dach in der Mitte im Inneren einer Garage verstaut. Die Garage senkt sich ab und gibt die Membrane frei, welche mit Wagen an den Tragseilen befestigt ist. Mit Seilwinden wird die Membrane synchron vom Zentrum zum Dachrand gezogen. Am Rand angekommen, wird die Membrane mit einer Spanneinheit synchron mit hoher Kraft straff gespannt. Anschließend schließt die Garage den "Parkplatz" der Membrane. Das Öffnen des Dachs geschieht in umgekehrter Reihenfolge.

Gleitwagen sind bereits aus dem Stand der Technik bekannt, wobei bei einem zylinderförmig ausgebildeten Körper, welcher bevorzugt aus Polyamid besteht ein Seil bzw. ein Laufkörper durch eine bevorzugt mittig angeordnete, kanalartige Durchgangsöffnung durchgeführt wird. Im Inneren der Durchgangsöffnung weist der Gleitwagen eine Gleitfläche auf, an welcher das Seil gleitend vorbei geführt wird. Der Kontakt zwischen dem Gleitwagen und der Laufkörper erfolgt somit nur über die Gleitfläche.

Im unteren Bereich weist der Gleitwagen eine Aufnahmevorrichtung auf, mit welcher eine Verbindung zu der Dachmembran hergestellt wird. Bei einem Zugvorgang wirkt neben der vertikalen Kraft der Dachmembran, eine Zugkraft auf den Gleitkörper.

Wesentlicher Nachteil bei der Ausbildung des Gleitwagens nach dem Stand der Technik war bisher, dass durch den Einsatz von Seilen als Laufkörper über einen bestimmten Zeitraum eine Verschmutzung auf den Seilen zu einer Erhöhung der Reibung bis hin zu einem Verklemmen des Gleitwagens geführt hat. Durch die höhere Last aufgrund der Verschmutzung konnte somit ein gleichmäßiges Öffnen bzw. Schließen des Stadiondaches nicht mehr gewährleistet werden.

Ferner ergab sich der Nachteil, dass durch den Alterungsprozess der Gleitwerkstoffe, vor allem aufgrund von UV Strahlung, die Gleiteigenschaften der Gleitwagen deutlich verringert wurden und nicht mehr sauber auf dem Seilkörper zu führen war. Die eingesetzte Überwachung der Zugkraft hat daher teilweise den Zugvorgang und somit den Öffnungsvorgang des Daches abgebrochen.

Ein weiterer negativer Effekt der Seilverschmutzung bzw. des Alterungsprozess der Gleitstoffe ist, dass der Gleitwagen ungleichmäßigen anfährt, was im Fachterminus auch "Stickslip"-Effekt genannt wird. Dadurch entstehen sehr hohe Diagonalspannungen in der Membran zwischen den einzelnen Gleitwagen, sodass teilweise sehr hohe Zugkraftbelastungen auftreten, welche sich negativ sowohl auf das Stadiondach, als auch auf die Seilwinden auswirken.

Dies beeinträchtigt insbesondere die Betriebssicherheit, was mit hohen Wartungskosten bzw. hohen Zeitausfällen verbunden ist.

Bevorzugt wird lediglich der erste Gleitwagen, welcher als Fahrwagen bezeichnet wird, mit dem Zugseil der Seilwinde verbunden. Die nachfolgenden Gleitwagen sind dann nur noch über die dazwischen hängende Membran verbunden. Durch diese Anordnung treten besonders hohe "Stickslip"-Effekte auf, was sich ebenfalls sehr nachteilig auf die Betriebssicherheit eines Stadiondaches auswirkt.
So können die folgenden Gleitwagen, welche hinter dem eigentlichen Fahrwagen angeordnet sind, nicht einzeln angesteuert werden, sondern von dem Fahrwagen bzw. von dem gleichmäßigen Ziehen des Fahrwagens abhängig.

Mit der US 4 714 354 A wird ein Gleitwagen offenbart, wobei zwei Laufrollen im unteren Bereich des Gleitwagens angeordnet sind, welche durch Blattfedern mit der Führungsstange in Berührung gebracht werden. Die Führungsstange liegt somit stets an der Gleitfläche an, während von unten mit Hilfe der Blattfedern die Wälzkörper an den Laufkörper hingedrückt werden, um das Spiel zwischen dem Gleitwagen und der Führungsstange zu reduzieren. Bei der vorliegenden Ausführungsform ist stets die Gleitfläche des Gleitwagens mit der Führungsstange in Kontakt, wodurch relativ große Kräfte notwendig sind, um den Gleitwagen entlang der Führungsstange zu ziehen.

Aufgabe der vorliegenden Erfindung ist es daher, einen Gleitwagen bereit zu stellen, mit dem ein besseres, kontinuierliches Gleiten auf einem Laufkörper möglich ist.

Zur Lösung der gestellten Aufgabe ist die Erfindung durch die technische Lehre des Anspruches 1 gekennzeichnet.

Wesentliches Merkmal der Erfindung ist, dass der Gleitwagen neben mindestens einer Gleitfläche zusätzlich mindestens einen Wälzkörper aufweist, welcher bevorzugt im oberen Gleitkörperteil angeordnet ist und über ein elastisches Element mit dem oberen Gleitkörper verbunden ist.

Durch die erfindungswesentliche Ausführungsform ist es nun erstmals möglich, bei einem "Normalbetrieb" den Gleitwagen stets über Wälzkörper zu führen, wobei die Wälzkörper bevorzugt als Rollen ausgebildet sind und auf einem Tragseil laufen.

Unter einem Normalbetrieb versteht die vorliegende Anmeldung einen Zugvorgang des Gleitwagens, bei dem keine großen, weiteren Krafteinwirkungen aufgrund von Schnee- Wind- oder Regenlasten auftreten.

Durch die Anordnung der Wälzkörper zusammen mit einem elastischen Element im oberen Bereich des Gleitkörpers weicht bei einer Verschmutzung des Tragseils der Wälzkörper innerhalb des Gleitwagens aus, sodass kleinere Unebenheiten bzw. Kraftänderungen durch das elastische Element ausgeglichen werden.

In einem ersten bevorzugten Ausführungsbeispiel weist der Gleitwagen einen oberen Gleitkörper und einen unteren Gleitkörper auf, welche über eine Schraubverbindung miteinander verbunden sind und zusammen eine zylindrische Grundform haben. Zwischen dem oberen Gleitkörper und dem unteren Gleitkörper ist eine zylindrische Ausnehmung angeordnet, durch welche der Laufkörper, welcher bevorzugt als Seil ausgebildet ist, hindurch geführt wird.

Im Bereich des oberen Gleitkörpers ist mindestens ein Wälzkörper angeordnet. Die Verbindung des Wälzkörpers mit dem oberen Gleitkörper erfolgt über ein elastisches Element. Mit dieser Ausführungsform ist es nun möglich, aufgrund der Anordnung von zylindrischen Wälzkörpern und dem elastischen Element ein gleichmäßigeres Ziehen des Gleitwagens zu erreichen und somit die Diagonalspannungen zwischen den einzelnen Gleitwagen zu reduzieren.

Die ausschließliche Verwendung von Rollkörpern im Bereich der Antriebstechnik für wandelbare Dächer war bisher nur bedingt möglich, da sehr hohe Lasten wirken und die Rolle meist aufgrund ihrer Größe und Ausführung für sich allein keine hohen Traglasten aufnehmen kann. Aus diesem Grund sieht die Erfindung erstmalig vor, einen Gleitwagen, welcher eine obere Gleitfläche und eine untere Gleitfläche aufweist, zusätzlich mit Wälzkörpern auszustatten, welche federnd bzw. elastisch gegenüber dem Grundkörper (Gleitwagen) angeordnet sind. Durch die Anordnung von Wälzkörpern in einem Gleitwagen entsteht somit ein Hybridgleitwagen, welcher neben den Gleitflächen zusätzliche Wälzkörper aufweist.

Ziel ist es somit, die hohe Möglichkeit der Lastaufnahme durch Gleitflächen mit dem geringen Rollwiderstand einer Rolle zu kombinieren. Dies war bisher aus dem Stand der Technik nicht bekannt, da dieser stets nur einen Gleitwagen mit Gleitflächen eingesetzt hat.

Als Wälzkörper können beispielsweise (seilangepasste) Rollen, tonnenförmige, ballige oder kugelförmige Wälzkörper eingesetzt werden, welche sich auf dem Laufkörper gut abrollen und somit die Reibung reduzieren.

Durch den Einsatz von profilierten Wälzkörpern findet ferner eine Zentrierung des Gleitwagens auf dem Tragseil statt, wodurch insbesondere ein gegenüber der Längsachse des Tragseils geneigtes Ziehen vermieden wird. Dieser Effekt wird zusätzlich dadurch verstärkt, wenn die Wälzkörper beabstandet voneinander angeordnet sind.

In einer ersten bevorzugten Ausführungsform sind die Wälzkörper in der Ausnehmung des Gleitwagens angeordnet, so dass diese sich im Bereich der Gleitflächen befinden.

In einer weiteren Ausführungsform sind die Wälzköper außerhalb des Gleitwagens angeordnet, wobei die Verbindung zwischen dem Wälzkörper und dem Gleitwagen über ein elastisches Element erfolgt.

Als elastisches Element kann beispielsweise eine Blattfeder eingesetzt werden, wobei durch die unterschiedlichen Anordnungen von einem bzw. mehreren Federelementen die Federstärke eingestellt werden kann. Der Einsatz einer Blattfeder ist immer dann von Vorteil, wenn starke Verschmutzungen vorliegen oder hohe Kräfte wirken.

Des Weiteren ist der Einsatz eines Druckspeichers möglich. Generell können sämtliche elastische Elemente eingesetzt werden, welche den Wälzkörper gegenüber dem Gleitwagen bzw. dem oberen Gleitwagenkörper federnd bzw. elastisch anordnen.

Unter einem Laufkörper versteht die vorliegende Erfindung ein Tragseil bzw. Gleitschienen in jeglicher Form, auf welchen der Gleitwagen mit seinen Auflageflächen entlang gleiten kann und zusätzlich bzw. darüber hinaus der Wälzkörper darauf abgerollt werden kann.
Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1: Schematische Darstellung des Gleitwagens von einer Oberansicht
- Figur 2: Schematische Darstellung des erfindungsgemäßen Gleitwagens von einer Unteransicht
- Figur 3: Schematische Explosionsdarstellung des Gleitwagens
- Figur 4: Gleitwagen im unbelasteten Fall
- Figur 5: Schnitt durch den Gleitwagen der Figur 4 im unbelasteten Fall
- Figur 6: Gleitwagen im Belastungsfall
- Figur 7: Schnitt durch den Gleitwagen gemäß Figur 6 im belasteten Fall
- Figur 8: Gleitwagen mit der Anordnung eines Seiles in der mittigen Ausnehmung
- Figur 9: Schnitt durch den Gleitwagen gemäß Figur 8 mit der Anordnung des Seiles
- Figur 10: Anordnung des Seiles im Gleitwagen im belasteten Zustand
- Figur 11: Schnitt durch den Gleitwagen gemäß Figur 10 im belasteten Fall
- Figur 12: Darstellung des erfindungsgemäßen Gleitwagens mit zwei angeordneten Rollwagen im oberen Gleitkörperteil
- Figur 13: Darstellung des Gleitwagens mit zwei Rollwagen im oberen Gleitkörperteil
- Figur 14: Schnitt durch den Gleitwagen gemäß Figur 13
- Figur 15:: Darstellung des Gleitwagens mit Anordnung eines Rollwagens außerhalb (Oberansicht)
- Figur 16:: Darstellung des Gleitwagens mit Anordnung eines Rollwagens außerhalb (Unterransicht)
- Figur 17:: Schematische Explosionsdarstellung des Gleitwagens (Rollwagen außerhalb)
- Figur 18:: Gleitwagen im unbelasteten Fall (Rollwagen außerhalb)
- Figur 19:: Schnitt durch den Gleitwagen der Figur 18 im unbelasteten Fall
- Figur 20:: Gleitwagen im Belastungsfall (Rollwagen außerhalb)
- Figur 21:: Schnitt durch den Gleitwagen gemäß Figur 20 im belasteten Fall
- Figur 22:: Gleitwagen mit der Anordnung eines Seiles in der mittigen Ausnehmung (unbelasteter Fall)
- Figur 23:: Schnitt durch den Gleitwagen gemäß Figur 22 mit der Anordnung des Seiles (unbelasteter Fall)
- Figur 24:: Gleitwagen mit Anordnung eines Seils im belasteten Zustand
- Figur 25:: Schnitt durch den Gleitwagen gemäß Figur 24 mit der Anordnung des Seiles (belasteter Fall)

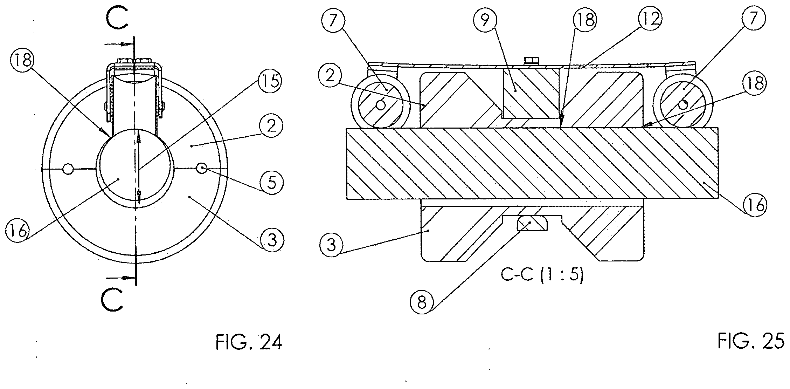

- Figur 25:: Schematische Explosionsdarstellung des Gleitwagens mit zwei Rollwagen außerhalb

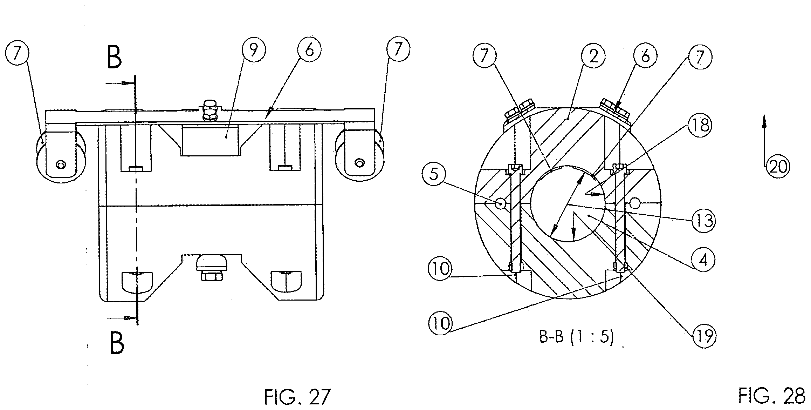

- Figur 27:: Gleitwagen im unbelasteten Fall zwei Rollwagen außerhalb
- Figur 28:: Schnitt durch den Gleitwagen gemäß Figur 27 mit zwei Rollwagen

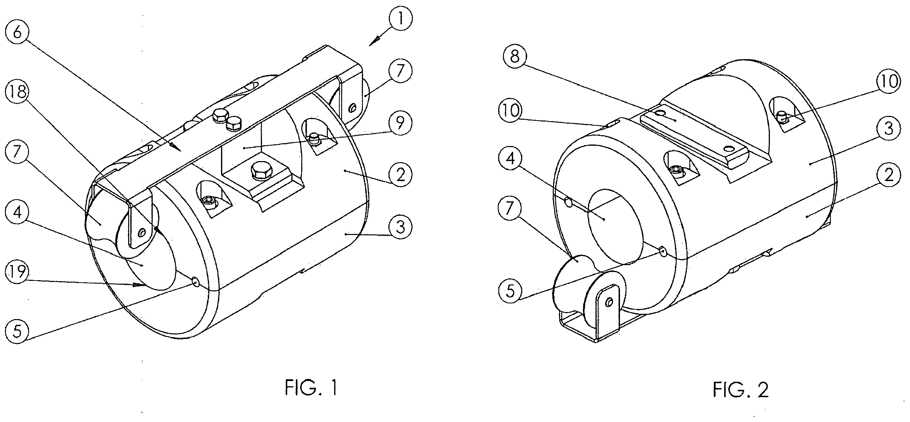

Mit der Figur 1 wird der erfindungsgemäße Gleitwagen 1 gezeigt, welcher bevorzugt aus einem oberen Gleitkörper 2 und einem unteren Gleitkörper 3 besteht. Der obere Gleitkörper 2 und der untere Gleitkörper 3 bilden zusammen eine zylindrische Form, welche mit ihrer mittig angeordneten Ausnehmung 4 einen Laufkörper 16 umgibt. Die Ausnehmung 4 ist hierbei kanalförmig ausgebildet. Sie kann jedoch jede beliebige Form aufweisen.

Bei dem Laufkörper 16 kann es sich in einem Ausführungsbeispiel um ein Tragseil handeln, welches durch die Ausnehmung 4 des oberen Gleitkörpers 2 und des unteren Gleitkörpers 3 hindurchgeführt wird.

Der Gleitwagen 1 weist im Inneren der Ausnehmung 4 eine obere Auflagefläche 18 auf, welche mit dem Laufkörper 16 zusammen wirkt. Bei starken Belastungen, wie z.B. Windlasten oder Sogbelastungen wirkt darüber hinaus eine untere Gleitfläche 19 mit dem Laufkörper 16.

Im Bereich des oberen Gleitkörpers 2 ist ein Rollwagen 6 angeordnet, welcher u-förmig ausgebildet ist. An den beiden u-förmigen Schenkeln des Rollwagens 6 sind jeweils ein Wälzkörper 7 angeordnet ist, welche durch eine Ausnehmung 11 im oberen Bereich des Gleitkörpers sich in die Ausnehmung 4 hinein erstrecken und somit mit dem Laufkörper 16 in Verbindung steht.

Durch die u-förmige Ausbildung des Rollwagens 6 ist es damit erstmals möglich, mindestens 2 Wälzkörper in den Innenraum des Gleitwagens hineinzuerstrecken, wodurch nun erstmals die Wälzkörper mit dem Laufkörper 16 in Verbindung stehen und sich auf diesem abrollen.

Der Gleitwagen 1 besteht hierbei bevorzugt aus Polyamid. Es ist jedoch auch möglich den Gleitwagen aus Polyamid mit einer Aluminiumummantelung zu versehen. Selbstverständlich beansprucht die Erfindung sämtliche Werkstoffe für den Gleitwagen, welche geeignet sind, eine geringe Gleitreibung auf dem Laufkörper 16 zu erzeugen.

Der Rollwagen 6 besteht bevorzugt aus dem u-förmigen Profil, welches als Haltevorrichtung 9 ausgebildet ist. Die Haltevorrichtung 9 ist im eingebauten Zustand auf einer Fläche 17 auf dem oberen Gleitkörper angeordnet. Die Befestigung des Rollwagens 6 über die Haltevorrichtung 9 erfolgt beispielsweise über eine Schraubverbindung. Es ist jedoch auch eine andere Verbindung wie eine Klebeverbindung oder eine geschweißte Verbindung möglich. Generell können sämtliche formschlüssige oder eine materialschlüssige Verbindung eingesetzt werden.

Mit der Figur 2 wird eine Unteransicht des erfindungsgemäßen Gleitwagen 1 gezeigt, wobei durch die Ausnehmung 4 der Wälzkörper 7 dargestellt ist, welcher sich in den Innenraum des Gleitwagen 1 hineinerstreckt mit dem Laufkörper 16 im unbelasteten Zustand in Verbindung steht.

Gemäß der Figur 2 hat der Wälzkörper 7 im unbelasteten Zustand stets einen Kontakt mit einem Laufkörper 16. Der Gleitwagen 1 rollt daher primär über die Wälzkörper 7 auf dem Laufkörper 16 ab.

Unter einem unbelasteten Zustand versteht die vorliegende Erfindung den allgemeinen Fahrzustand, bei dem keine zusätzlichen Kräfte wirken. Unter zusätzlichen Kräften werden beispielsweise dynamische Kräfte, wie z. B. Wind, Schnee oder Erdbebenkräfte verstanden. Ferner können Reibungskräfte auftreten, welche beispielsweise durch eine Verschmutzung des Laufkörpers oder durch einen Alterungsprozess der Gleitstoffe entstehen können.

Bei einem belasteten Zustand entstehen höhere Kräfte aufgrund der oben angegebenen Funktionsstörungsmerkmale, sodass der Gleitwagen 1 nun nicht mehr ausschließlich auf den Wälzkörpern 7 abrollt, sondern nun über die Gleitflächen 18 bzw. 19 gezogen wird.

Gemäß der Figur 2 sind ferner runden Ausnehmungen 5 dargestellt, durch welche die Zugseile verlaufen die den ersten Fahrwagen ziehen. Bevorzugt wird eine Winde im Bereich einer geschlossenen Schleife angeordnet, sodass ein "closed loop" entsteht und somit der erste Fahrwagen die weiteren Gleitwagen entweder wegzieht oder zusammen schiebt.

Aus der Figur 2 geht ferner hervor, dass auf der Unterseite bzw. im Bereich des unteren Gleitkörpers 3 eine Gurtklemme 8 angeordnet ist, welche als Verbindungsmittel für das Transportmedium dient. Das Transportmedium kann hierbei beispielsweise eine Membran, ein Netz oder planenförmigen Stoffe sein. Durch die Verbindung des Gleitwagens mit dem Transportmedium, setzen sich beim Spannen des Mediums die einzelnen Gleitwagen 1 in Bewegung.

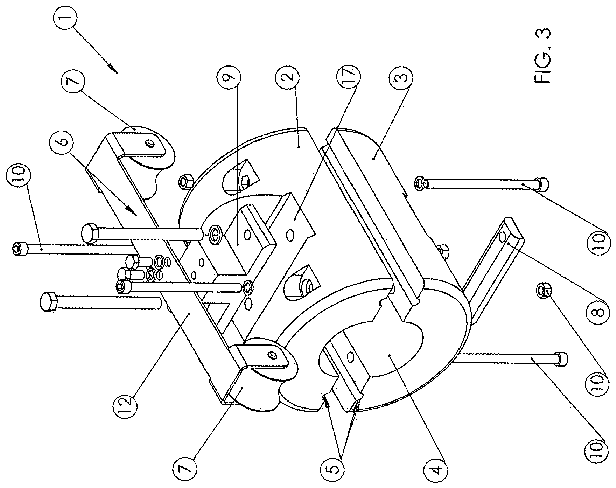

Mit der Figur 3 wird eine perspektivische Explosionsdarstellung des Gleitwagen 1 gezeigt. Der Gleitwagen 1 besteht im Wesentlichen aus dem oberen Gleitkörper 2 und dem unteren Gleitkörper 3, welche zylindrisch ausgebildet sind. Gemäß der Figur 3 ist der Rollwagen 6 im oberen Bereich des Gleitkörpers 2 angeordnet, wobei der Rollwagen 6 eine u-förmige Grundform aufweist.

In einer bevorzugten Ausführungsform ist der Rollwagen 6 selbst ein elastisches Element 9 ausgebildet. Dies kann beispielsweise eine Blattfeder sein. Der gesamte Rollwagen 6 ist auf einer Haltevorrichtung 9 angeordnet, welche als Verbindungsglied zu dem oberen Gleitkörper 2 und der Fläche 17 des oberen Gleitkörpers dient.

Mit den Verbindungsmitteln 10 wird die Montage des Gleitwagens erreicht, wobei diese den oberen Gleitkörper mit dem unteren Gleitkörper lösbar verbinden. Unter einer lösbaren Verbindung wird verstanden, dass der Gleitwagen 1 für Montagezwecke bzw. für Wartungszwecke auseinander genommen werden kann und somit von dem Laufkörper 16 entfernt werden kann.

Die bevorzugt zylindrisch ausgebildeten Wälzkörper 7 erstrecken sich durch eine Ausnehmung 11, welche im Bereich des oberen Gleitkörpers 2 angeordnet ist und reichen somit in die Ausnehmung 4 des Gleitwagen 1 hinein. Die Erstreckung in die Ausnehmung 11 erfolgt dergestalt, dass nun die Wälzkörper 7 eine Verbindung mit dem Laufkörper 16 im unbelasteten "Normal"-Zustand haben. Wie bereits oben erwähnt, sieht die Erfindung als unbelasteten Zustand einen Zustand an, bei dem keine zusätzlichen Kräfte, wie zum Beispiel Windkräfte oder Reibungskräfte auftreten. Im Normalzustand wird somit der Gleitwagen 1 auf den Wälzkörpern 7 auf dem Laufkörper 16 hin- und hergezogen wird.

Unter einem unbelasteten Zustand versteht ferner die Erfindung die Betriebsbedingungen, unter welchen das Dach hin- und hergezogen werden darf. Bei dem unbelasteten Zustand können zwar Verunreinigungen auf dem Laufkörper 16 vorliegen, welche einen erhöhten Kraftaufwand bewirken, diese können jedoch aufgrund der Anordnung eines elastischen Elementes 9 zusammen mit den Wälzkörpern 7 weitgehend abgefangen werden.

Bei einem belasteten Zustand treten zusätzliche Kräfte aufgrund von Wind, Schnee oder Erdbeben oder dynamische Querkräfte auf, welche sich negativ auf das Zugverhalten des Gleitwagens auswirken und dadurch ein kritischer Zustand eintritt.

In einem solchen belasteten Zustand weichen nun die Wälzkörper aus der Ausnehmung heraus bzw. in die Ausnehmung 11 hinein und führen dazu, dass nur noch die Gleitflächen 18 bzw. Gleitflächen 19 mit dem Laufkörper 16 in Verbindung sind und auf diesem gleiten.

Im belasteten Zustand findet somit der Hauptgleitprozess nur noch auf den Gleitflächen 18 bzw. 19 statt, während die Wälzkörper 7 eine untergeordnete Rangordnung haben. Teilweise ist es möglich, dass die Wälzkörper 7 noch mit dem Laufkörper 16 in Verbindung sind. Der wesentliche Gleitprozess findet jedoch im belasteten Zustand auf den Gleitflächen 18, 19 statt.

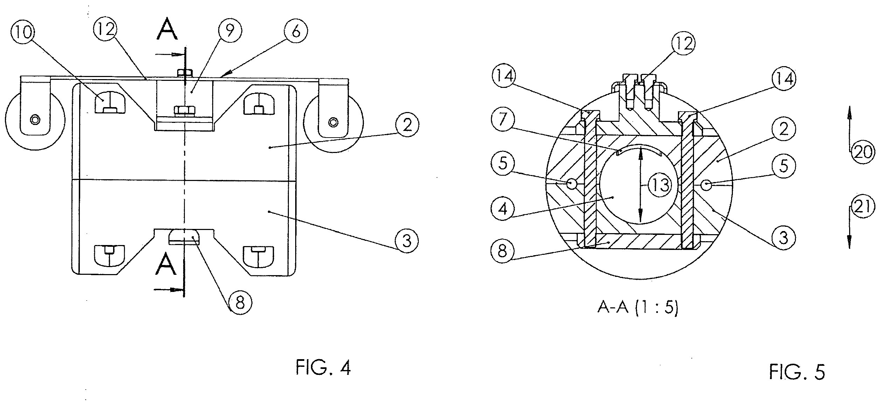

Mit der Figur 4 wird der Gleitwagen 1 im unbelasteten Zustand dargestellt, wobei der Rollwagen 6, welcher bevorzugt aus einem elastischen Element, wie eine Blattfeder gerade ausgebildet ist und somit die Wälzkörper 7 sich in die Ausnehmung 4 des Gleitwagens 1 hinein erstrecken.

Mit der Figur 5 wird ein Schnitt des Gleitwagens gemäß Figur 4 dargestellt, wobei die Wälzkörper 7 sich in den Innenraum der Ausnehmung 4 erstrecken und somit ein Abstand 13 zwischen den Wälzkörpern 7 und dem unteren Ausnehmungsrand des unteren Gleitkörpers 3 gebildet ist. Im oberen Bereich der Figur 5 ist ferner das elastische Element 12 dargestellt, welches eine Verbindung zu den Wälzkörpern 7 hat.

Im Belastungsfall weichen die Wälzkörper 7 in Pfeilrichtung 20 nach oben aus, sodass die Gleitflächen 18 bzw. 19 freigeben werden und somit der Gleitwagen 1 größtenteils nur noch auf den Gleitflächen 18 bzw. 19 gezogen wird.

Die Grundidee des elastischen Elementes 12 ist bei der vorliegenden Erfindung stets eine Schonung des Wälzkörpers 7, damit dieser federnd bzw. elastisch gelagert ist und somit bei starken Verschmutzungen bzw. bei erhöhten Krafteinwirkungen ausweichen kann.

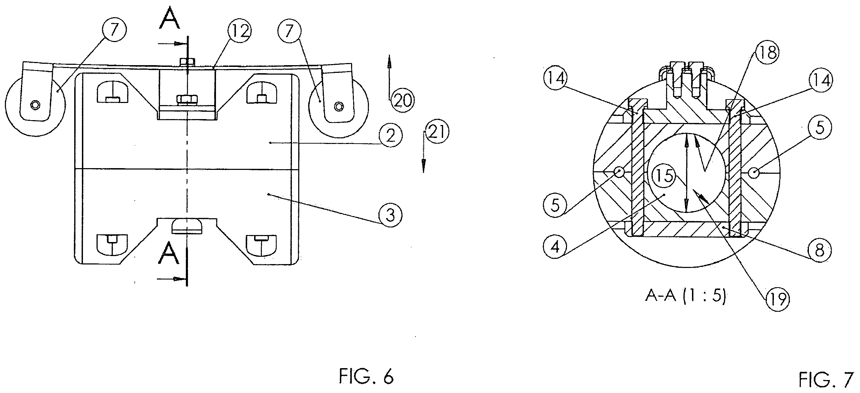

Mit der Figur 6 wird ein belasteter Zustand des Gleitwagens 1 gezeigt, wobei das elastische Element 12, welches gemäß Figur 6 als Blattfeder ausgebildet ist, der Last ausgewichen ist. Die Wälzkörper 7 sind in Pfeilrichtung 20 aus der Ausnehmung 4 gewichen.

Mit der Figur 7 wird ein Schnitt durch die Figur 6 gezeigt, wobei nun aufgrund des Belastungsfalls ein größerer Abstand 15 in der Ausnehmung 4 gegeben ist und somit der Laufkörper 16 sich entweder auf den Gleitflächen 18 und/ oder 19 fortbewegt, da die Wälzkörper 7 aufgrund des Belastungsfalls und den Einsatz des elastischen Elementes 12 aus der Ausnehmung 4 entwichen sind.

Mit der Figur 7 werden ferner die Tragschrauben 14 dargestellt, welche bevorzugt dergestalt ausgebildet sind, eine Zuglast bzw. eine Traglast auf den Gleitkörper 2,3 aufzubringen.

Es ist ferner anzumerken, dass nun im belasteten Zustand bzw. bei einem Auftreten von höheren Reibungskräften die Wälzkörper in Pfeilrichtung 20 entweichen. Durch die Anordnung der Wälzkörper zusammen mit einem elastischen Element 12 findet nach dem aufgetretenen belasteten Zustand ein Rückspringen bzw. Zurückverdrängen der Wälzkörper in Pfeilrichtung 21 in die Ausnehmung 4 statt.

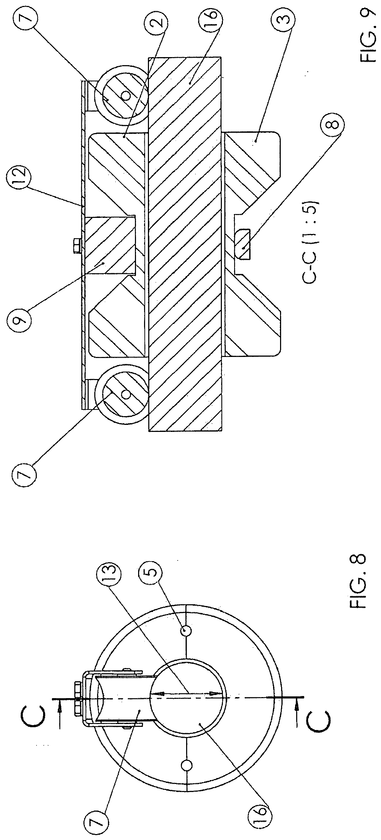

Mit der Figur 8 wird erstmals der erfindungsgemäße Gleitwagen 1 zusammen mit einem Körper 16 dargestellt, wobei der Laufkörper gemäß Figur 8 als Tragseil ausgebildet ist. Die Figur 8 zeigt den Gleitwagen im unbelasteten Zustand, wobei die Wälzkörper 7 in Verbindung mit dem Laufkörper 16 stehen. Gemäß Figur 8 ist aufgrund des unbelasteten Zustands keine Berührung mit den Gleitflächen 18 bzw. 19 vorhanden, sodass der Gleitwagen 1 über die Wälzkörper 7 auf dem Laufkörper 16 abrollt.

Mit der Figur 9 wird ein Schnitt der Figur 8 dargestellt. Das Tragseil 16 wird durch den Gleitwagen 1 geführt. Die Wälzkörper 7 stehen in Kontakt mit dem Laufkörper 16 und rollen sich auf diesem ab, was die Reibungskräfte reduziert.

Gemäß Figur 9 ist ferner das elastische Element 12 im unbelasteten Zustand dargestellt, was bedeutet, dass das elastische Element die Wälzkörper 7 in die Ausnehmung 11 hineinverdrängt und somit einen Kontakt der Wälzkörper 7 mit dem Laufkörper 16 hergestellt ist.

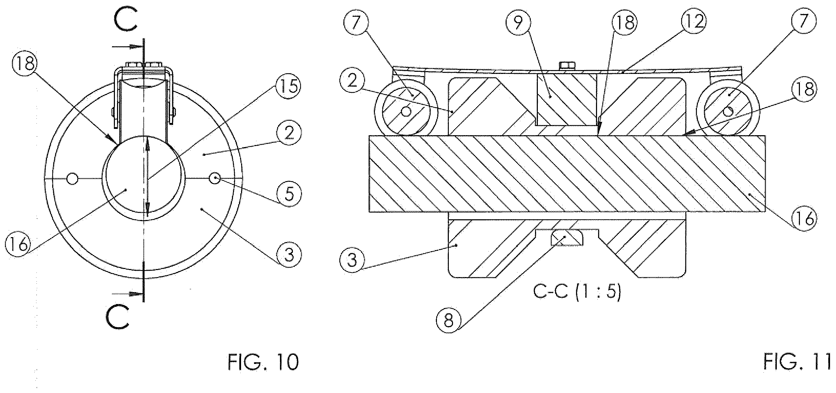

Mit der Figur 10 wird der erfindungsgemäße Gleitwagen 1 im belasteten Zustand dargestellt. Gemäß Figur 10 befindet sich nun das Tragseil 16 im Kontakt mit der oberen Gleitfläche 18 statt.

Gemäß der Figur 10 ist ferner ein Abstand 15 dargestellt, welcher sich ergibt, wenn die Wälzkörper 7 nahezu vollständig in der Ausnehmung 11 des oberen Gleitkörpers hineinverdrängt werden und somit lediglich ein Gleitvorgang bzw. vorrangig ein Gleitvorgang auf den Gleitflächen 18 bzw. 19 stattfindet.

Gemäß der Figur 11 ist ein Schnitt dargestellt, wobei die Wälzkörper 7 in die Ausnehmungen 11 des oberen Gleitkörpers ausgewichen sind und somit der Laufkörper 16 mit der Gleitfläche 18 in Verbindung steht und auf dieser gleitet.

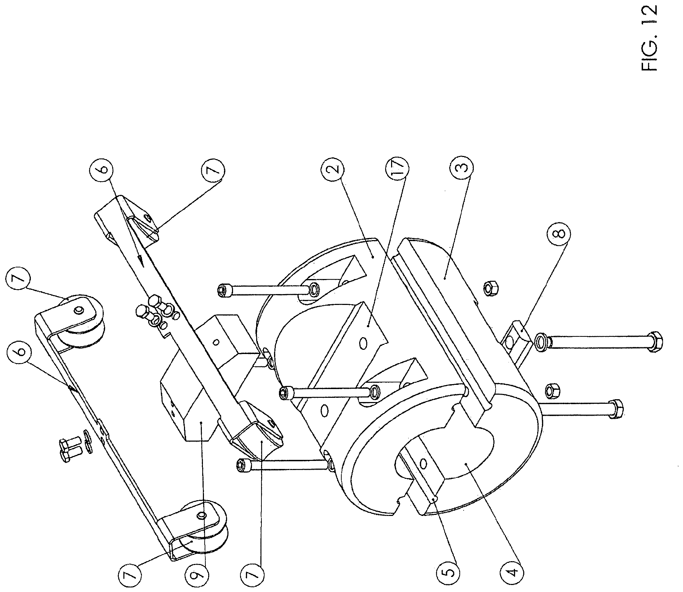

Mit der Figur 12 wird eine weitere Ausführungsform des erfindungsgemäßen Gleitwagens 1 gezeigt, wobei im oberen Gleitkörperbereich 2 nun zwei Rollwagen 6 angeordnet sind, welche bevorzugt u-förmig ausgebildet sind und an ihren beiden u-förmigen Schenkeln jeweils ein Wälzkörper 7 aufweisen.

Bei dem Gleitwagen 1 können eine Vielzahl von Rollwägen 6 am Umfang des Gleitwagens 1 angeordnet werden, welche ein Abrollen der Wälzkörper 7 auf den Laufkörper 16 ermöglichen. Durch die Anordnung von mehreren Rollwagen 6 verteilt sich insbesondere die Kraft besser auf mehrere Rollen bzw. es können mehrere elastische Elemente 12 eingesetzt werden, wodurch ein besseres Ausgleichen des Gleitwagens 1 gegenüber dem Laufkörper 16 stattfindet. Ferner ist eine bessere Führungseigenschaft durch die Anordnung von mehreren Rollwägen 6 gegeben.

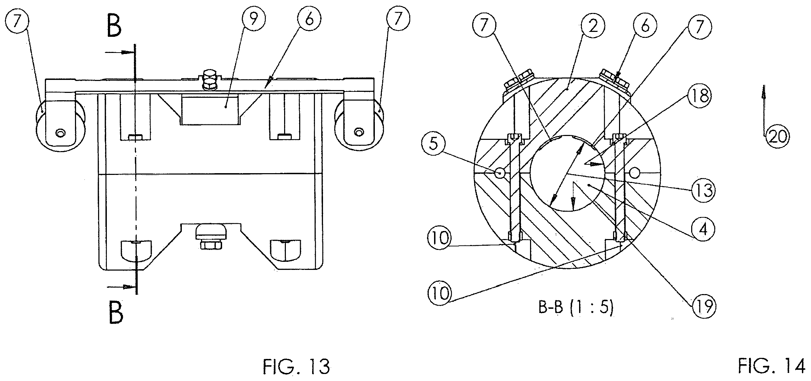

Mit den Figuren 13 und 14 wird der erfindungsgemäße Gleitwagen mit der Anordnung von zwei Rollwägen 6 dargestellt, welche im oberen Bereich des oberen Gleitkörpers 2 angeordnet sind. Die Figur 14 zeigt den unbelasteten Betriebszustand, was bedeutet, dass die Wälzkörper 7 sich in die Ausnehmung 4 des Gleitwagens 1 hineinerstrecken und somit ein Abrollen der Wälzkörper 7 auf den Laufkörper 16 gewährleistet ist. Bei diesem Zustand liegt der Abstand 13 vor, welcher sich zwischen der unteren Gleitfläche 19 und der Fläche des Wälzkörpers 7 ergibt.

Findet nun eine höhere Krafteinwirkung auf den Gleitwagen 1 aufgrund von Windkräften bzw. Verunreinigung auf dem Laufkörper statt, so entweichen die Wälzkörper 7 in Pfeilrichtung 20 aus der Ausnehmung 4 hinaus, wodurch nun der Gleitwagen 1 lediglich auf den Gleitflächen 18 bzw. 19 gleitet.

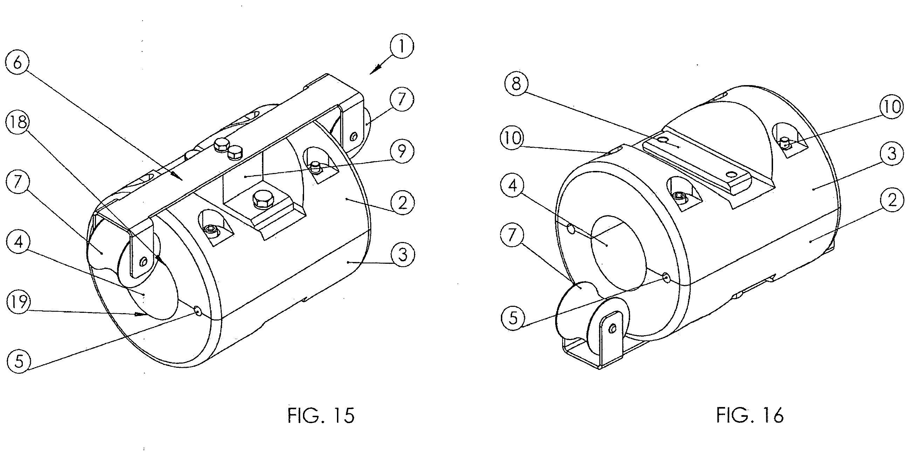

Mit den folgenden Figuren 15 bis 28 wird eine weitere bevorzugte Ausführungsform des Gleitwagens gezeigt. Wesentliches Merkmal ist hierbei, dass der mindestens eine Rollwagen 2 sich außerhalb des oberen und unteren Gleitkörpers 2, 3 befindet. Dies bedeutet, dass sich der Rollwagen 2 über das Profil des Gleitkörpers 1 erstreckt. Diese Ausführungsform kann unter Anderen auch nachträglich an einen bestehenden Gleitwagen 1 montiert werden, da die Befestigung des Rollwagens 6 am Aussenumfang des Gleitwagens 1 erfolgt.

Gemäß der Figur 15 besteht der Gleitwagen 1 aus einem oberen Gleitkörper 2 und einem unteren Gleitkörper 3, welche über die Verbindungsmittel 10 lösbar miteinander verbunden sind. Am Aussenumfang bzw. in einer Ausnehmung des oberen Gleitkörpers 2 ist der Rollwagen 6 angeordnet, welcher sich bevorzugt mit seiner Längserstreckung über den Umfang der Gleitkörper 2, 3 erstreckt und an dessen freien Enden jeweils mindestens ein Wälzkörper 7 angeordnet ist.

Der Rollwagen 6 ist hierbei als Blattfeder ausgebildet, wobei das flache, rechteckige Profil mit der Haltevorrichtung 9 an dem oberen Gleitkörper 2 befestigt ist und sich über das eigentliche Profil des Gleitwagens 1 erstreckt. Ausgehend von der Längsachse des Gleitwagens 1 erstreckt sich somit der Rollwagen 6 mindestens über eine Seite des Gleitwagens 1.

An seinen beiden Enden weist der Rollwagen 6 bevorzugt ein rechtwinkliges Profil auf, welches als Aufnahme für den mindestens einen Wälzkörper 7 dient. Das Profil des Rollwagens 6 ist hierbei so ausgebildet, dass im unbelasteten Zustand des Gleitwagens 1 die Wälzkörper 7 mit dem Laufkörper 16, welcher sich durch die Ausnehmung 4 hindurcherstreckt, in Verbindung stehen.

Mit der Figur 16 wird eine Unteransicht des Gleitwagens 1 offenbart, wobei sich der Wälzkörper 7 über die Längserstreckung des Gleitwagens 1 erstreckt.

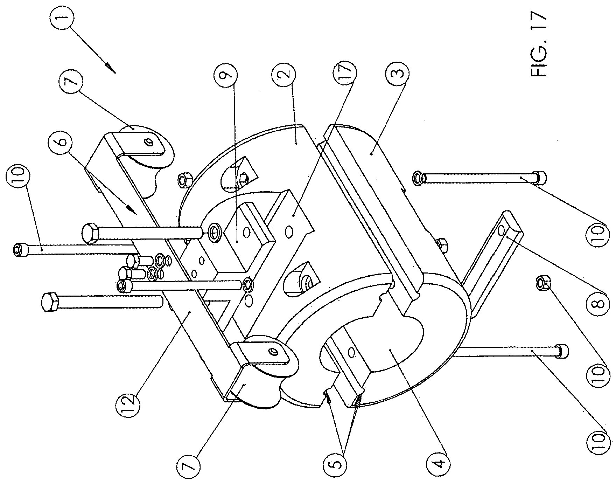

Die Figur 17 zeigt mit einer Explosionszeichnung die einzelnen Bauteile des Gleitwagens 1, wobei der Rollwagen 6 sich mit seinen beiden Wälzkörper 7 über den Umfang des Gleitwagens 1 erstreckt.

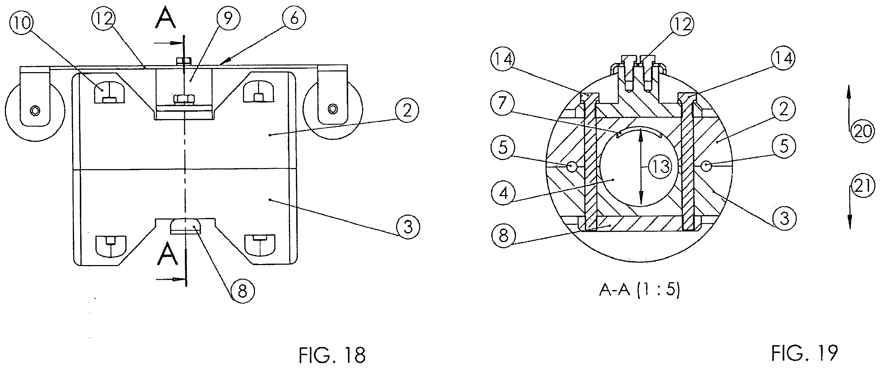

Figur 18 zeigt eine Seitenansicht des Gleitwagens 1 mit einer Anordnung der Wälzkörper 7 außerhalb der Ausnehmung 4. Die Wälzkörper 7 sind mit dem oberen Gleitkörper 2 über einen Rollwagen verbunden, welcher bevorzugt als Blattfeder ausgebildet ist. Entscheidend ist, dass der Rollwagen 6 die Wälzkörper 7 derart gegenüber dem Gleitwagenprofil 1 anordnet, dass im Belastungsfall der Wälzkörper 7 nach oben (bzw. auch nach unten) weg geschwenkt werden kann. Dieses Ausweichen der Wälzkörper 7 ist aufgrund der Ausbildung des Rollwagens 6 als elastischen Elementes 12 möglich.

Gemäß der Figur 19 ist ein Schnitt durch die Anordnung des Rollwagens 6 gemäß der Figur 18 dargestellt. Die Wälzkörper 7 erstrecken sich über die lichte Weite (Abstand 13) der Ausnehmung 4, so dass diese primär mit dem Laufkörper 16 in Verbindung stehen. In einem erhöhten Belastungsfall weichen die Wälzkörper 7 in Pfeilrichtung 20 aus. Nach dem Auftreten der Belastung schwenken die Wälzkörper 7 wieder in Pfeilrichtung 21 zurück.

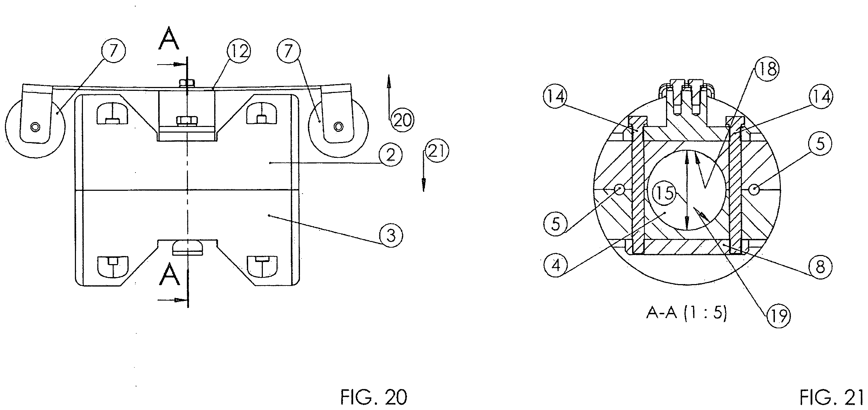

Die Figur 20 die Anordnung der Wälzkörper 7 außerhalb des Gleitwagens 1 in einem belasteten Zustand. Aufgrund der Ausbildung des Rollwagens als Blattfeder sind im belasteten Zustand die Wälzkörper 7 in Pfeilrichtung 20 nach oben verschwenkt. Es besteht nun (ausschließlich) ein Kontakt zwischen der Gleitfläche 18 und dem Laufkörper 16.

Dieser Zustand wird noch einmal mit dem Schnitt gemäß der Figur 21 dargestellt. Die Wälzkörper 7 haben keinen bzw. nur noch einen geringen Kontakt mit dem Laufkörper 16. Die Ausnehmung 4 weist nun den Abstand 15 auf.

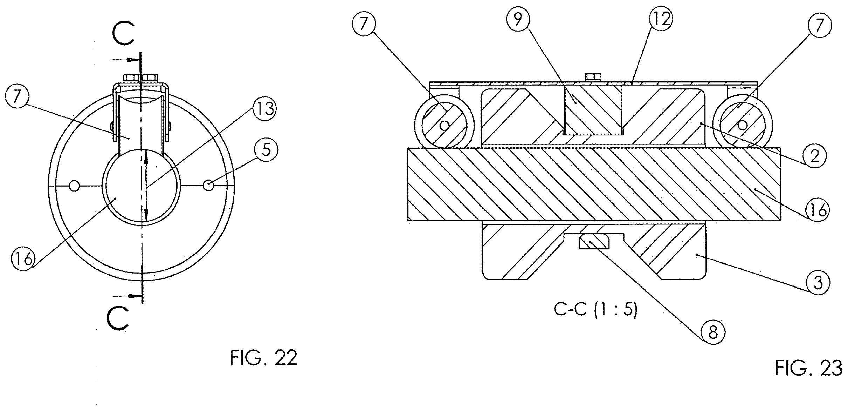

Figur 22 zeigt eine Sicht auf das Profil des Gleitwagens 1, wobei der Wälzkörper 7 beweglich und außerhalb des Gleitwagenprofils 1 angeordnet ist. Der Wälzkörper 7 ist in Kontakt mit dem Seil 16 und rollt auf diesem ab. Gemäß der Figur 22 ist dargestellt, dass der Wälzkörper 7 eine profilierte Rolle ist, welche an das Profil des Seils 16 angepasst ist. Durch diese Ausführungsform wird ein Verkeilen des Gleitwagens 1 reduziert, da die profilierten Rollen zusätzlich eine seitliche Führung bieten.

Mit der Figur 23 wird ein Schnitt durch die Ausführungsform gemäß Figur 22 gezeigt. Die profilierten Rollen 7 sind außerhalb des Gleitwagenprofils angeordnet. Die Verbindung erfolgt über den u-förmigen Rollwagen 6, welches bevorzugt als Blattfeder 12 ausgebildet ist.

Mit den Figuren 24 und 25 wird der belastete Zustand des Gleitwagens 1 gezeigt, wobei die Rollen 7 aus der lichten Weite der Ausnehmung 4 hinausgeschwenkt sind und nun die Gleitfläche 18 des oberen Gleitkörpers 2 mit dem Seil 16 in Kontakt ist. Gemäß der Figur 25 ist ferner eine Durchbiegung der Blattfeder 12 dargestellt, so dass die profilierten Rollen 7 nach oben (Pfeilrichtung 20) verschwenkt sind.

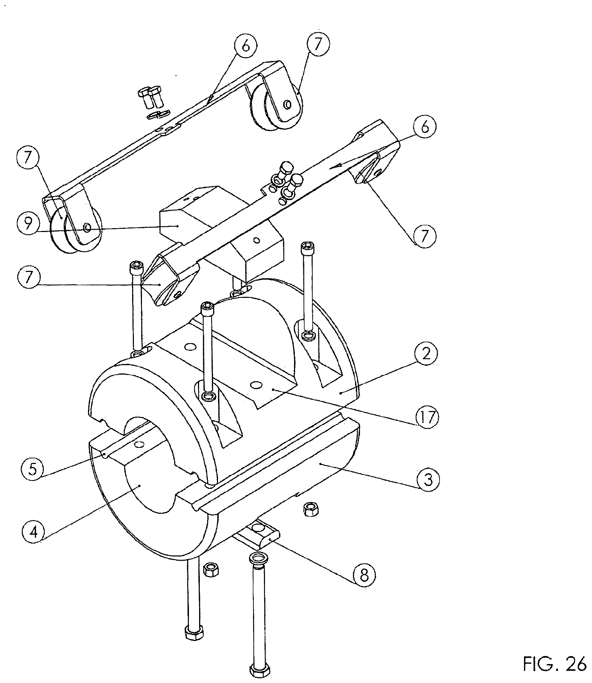

Mit den Figuren 26 bis 28 ist eine weitere bevorzugte Ausführungsform des Gleitwagens 1 dargestellt, wobei am Aussenumfang des oberen und/oder des unteren Gleitwagens mindestens zwei Rollwagen 6 angeordnet sind. Gemäß der Figur 26 sind zwei Rollwagen 6 mit jeweils zwei profilierten Rollen 7 am Aussenumfang des oberen Gleitwagens 2 angeordnet, welche im unbelasteten Zustand den Gleitwagen 1 gegenüber dem Seil 16 zentrieren.

Gemäß der Figur 28 erstrecken sich die profilierten Rollen 7 in die lichte Höhe der Ausnehmung 4, so dass diese im unbelasteten Zustand mit dem Seil 16 in Kontakt sind. Wichtig ist, dass über dem gesamten Umfang des Gleitwagens 1 mehrere Rollwagen 6 angeordnet werden können, welche eine bessere Zentrierung des gesamten Gleitwagens 1 gegenüber dem Laufkörper 16 bewirken.

Zusammenfassend ist zu sagen, dass durch die Verwendung des "Hybrid"-Gleitwagens 1, welcher neben den Gleitflächen 18, 19, zusätzliche Wälzkörper 7 aufweist, ein besseres Gleiten bzw. Ziehen des Gleitwagens 1 auf dem Laufkörper 16 erreicht wird. Dies bewirkt einen gleichmäßigeren Zugvorgang der Gleitwagen 1 bei geringeren Zugkräften.

### Zeichnungslegende

- 01: Gleitwagen
- 02: oberer Gleitkörper
- 03: unterer Gleitkörper
- 04: Ausnehmung
- 05: Ausnehmung für Windenseile
- 06: Rollwagen
- 07: Wälzkörper
- 08: Gurtklemmen
- 09: Haltevorrichtung
- 10: Verbindungsmittel
- 11: Ausnehmung für 7
- 12: elastisches Element
- 13: Abstand für 7 unbelastet
- 14: Tragschrauben
- 15: Abstand für 7 belastet
- 16: Laufkörper
- 17: Fläche für 9
- 18: Gleitfläche / Auflagefläche für 2
- 19: Gleitfläche für 3
- 20: Pfeilrichtung oben
- 21: Pfeilrichtung unten

## Patentansprüche

1. Verfahrvorrichtung, die einen Gleitwagen (1) und einen Laufkörper (16) beinhaltet, wobei der Laufkörper (6) als Seil ausgebildet ist und der Gleitwagen (1) eine kanalartige Ausnehmung (4) aufweist, durch welche der Laufkörper (16) hindurch greift und im Bereich der Ausnehmung (4) mindestens eine Gleitfläche (18, 19) zum Gleiten auf dem Laufkörper (16) angeordnet ist, **dadurch gekennzeichnet, dass** der Gleitwagen (1) eine zylindrische Grundform aufweist und zum Gleitwagen (1) mindestens ein Wälzkörper (7) gehört, welcher als Laufrolle ausgebildet ist, welche über mindestens ein elastisches Element (12) am ersten Gleitkörper (2) des Gleitwagens (1) angeordnet ist und mit dem Laufkörper (16) in Berührung bringbar ist.

2. Verfahrvorrichtung nach Anspruch 1, **dadurch gekennzeichnet, dass** sich der Wälzkörper (7) in die Ausnehmung (4) hineinerstreckt und zum Abrollen auf dem Laufkörper (16) geeignet ist.

3. Verfahrvorrichtung nach Anspruch 1, **dadurch gekennzeichnet, dass** der der Wälzkörper (7) außerhalb der Ausnehmung (4) angeordnet ist und zum Abrollen auf dem Laufkörper (16) geeignet ist.

4. Verfahrvorrichtung nach Anspruch 1 oder 2, **dadurch gekennzeichnet, dass** der Gleitwagen (1) aus mindestens einem ersten Gleitkörper (2) und mindestens einem zweiten Gleitkörper (3) besteht, welche miteinander lösbar verbunden sind.

5. Verfahrvorrichtung nach einem Anspruch 1 bis 4, **dadurch gekennzeichnet, dass** die Laufrolle (7) eine profilierte, seilangepasste Form aufweist.

6. Verfahrvorrichtung nach einem Anspruch 1 bis 5, **dadurch gekennzeichnet, dass** das elastische Element (12) an einem Rollwagen (6) angeordnet ist, welcher u-förmig ausgebildet ist und an seinem beiden Schenkelenden mindestens einen Wälzkörper (7) aufweist.

7. Verfahrvorrichtung nach einem Anspruch 1 bis 6, **dadurch gekennzeichnet, dass** am Außenumfang des ersten Gleitkörperteils (2) zwei Rollwagen (6) mit jeweils zwei profilierten Wälzkörper (7) angeordnet sind.

8. Verfahrvorrichtung nach einem Anspruch 1 bis 7, **dadurch gekennzeichnet, dass** der Gleitwagen (1) eine erste Gleitfläche (18) und eine zweite Gleitfläche (19) aufweist.

9. Verfahrvorrichtung nach einem Anspruch 1 bis 8, **dadurch gekennzeichnet, dass** der zweite Gleitkörper (3) mindestens eine Aufnahmevorrichtung in Form einer Gurtklemme (8) aufweist, welche eine Verbindung zwischen dem Gleitwagen (1) und einer flächigen Abdeckungen herstellt, welche als Membran ausgebildet ist.

10. Verfahrvorrichtung nach einem Anspruch 1 bis 9, **dadurch gekennzeichnet, dass** das elastische Element (12) eine Blattfeder, ein hydraulischer oder pneumatischer Dämpfer ist.

## Claims

1. Moving device which comprises a sliding carriage (1) and a travelling body (16), wherein the travelling body (6) is designed as a cable and the sliding carriage (1) has a channel-like recess (4), through which the travelling body (16) engages, and at least one sliding surface (18, 19) for sliding on the travelling body (16) is arranged in the region of the recess (4), **characterised in that** the sliding carriage (1) has a cylindrical basic shape and at least one roller body (7), which is designed as a roller which is arranged on the first sliding body (2) of the sliding carriage (1) via at least one resilient element (12) and can be contacted with the travelling body (16), belongs to the sliding carriage (1).

2. Moving device according to claim 1, **characterised in that** the roller body (7) extends into the recess (4) and is suitable for rolling on the travelling body (16).

3. Moving device according to claim 1, **characterised in that** the roller body (7) is arranged outside of the recess (4) and is suitable for rolling on the travelling body (16).

4. Moving device according to claim 1 or 2, **characterised in that** the sliding carriage (1) consists of at least one first sliding body (2) and at least one second sliding body (3) which are connected releasably to one another.

5. Moving device according to a claim 1 to 4, **characterised in that** the roller (7) has a profiled, cable-adapted shape.

6. Moving device according to a claim 1 to 5, **characterised in that** the resilient element (12) is arranged on a rolling carriage (6) which is designed to be U-shaped and has at least one roller body (7) on its two limb ends.

7. Moving device according to a claim 1 to 6, **characterised in that** the two rolling carriages (6) having in each case two profiled roller bodies (7) are arranged on the outer periphery of the first sliding body part (2).

8. Moving device according to a claim 1 to 7, **characterised in that** the sliding carriage (1) has a first sliding surface (18) and a second sliding surface (19).

9. Moving device according to a claim 1 to 8, **characterised in that** the second sliding body (3) has at least one receiving device in the form of a belt clamp (8) which produces a connection between the sliding carriage (1) and a two-dimensional cover which is designed as a membrane.

10. Moving device according to a claim 1 to 9, **characterised in that** the resilient element (12) is a leaf spring, a hydraulic or pneumatic damper.

## Revendications

1. Dispositif de déplacement qui comprend un chariot coulissant (1) et un corps de roulement (16), le corps de roulement (16) étant conçu comme un câble, et le chariot coulissant (1) présentant une cavité en forme de canal (4) dans laquelle passe le corps de roulement (16), et au moins une surface de coulissement (18, 19) pour le coulissement sur le corps de roulement (16) étant disposée dans la zone de la cavité (4), **caractérisé en ce que** le chariot coulissant (1) présente une forme de base cylindrique, et au chariot coulissant (1) appartient au moins un corps roulant (7) qui est conçu comme un galet de roulement qui est disposé par l'intermédiaire d'au moins un élément élastique (12) sur le premier corps coulissant (2) du chariot coulissant (1) et qui est apte à être amené en contact avec le corps de roulement (16).

2. Dispositif de déplacement selon la revendication 1, **caractérisé en ce que** le corps roulant (7) s'étend jusque dans la cavité (4) et est apte à rouler sur le corps de roulement (16).

3. Dispositif de déplacement selon la revendication 1, **caractérisé en ce que** le corps roulant (7) est disposé à l'extérieur de la cavité (4) et est apte à rouler sur le corps de roulement (16).

4. Dispositif de déplacement selon la revendication 1 ou 2, **caractérisé en ce que** le chariot coulissant (1) se compose d'au moins un premier corps coulissant (2) et d'au moins un deuxième corps coulissant (3), qui sont reliés l'un à l'autre de manière amovible.

5. Dispositif de déplacement selon l'une des revendications 1 à 4, **caractérisé en ce que** le galet de roulement (7) présente une forme profilée adaptée au câble.

6. Dispositif de déplacement selon l'une des revendications 1 à 5, **caractérisé en ce que** l'élément élastique (12) est disposé sur un chariot de roulement (6) qui a une forme en U et comporte à ses deux extrémités de branches au moins un corps roulant (7).

7. Dispositif de déplacement selon l'une des revendications 1 à 6, **caractérisé en ce qu'**il est prévu sur la circonférence extérieure du premier élément de corps coulissant (2) deux chariots coulissants (6) avec chacun deux corps roulants (7) profilés.

8. Dispositif de déplacement selon l'une des revendications 1 à 7, **caractérisé en ce que** le chariot coulissant (1) présente une première surface de coulissement (18) et une seconde surface de coulissement (19) .

9. Dispositif de déplacement selon l'une des revendications 1 à 8, **caractérisé en ce que** le second corps de coulissement (3) comporte au moins un dispositif de réception sous la forme d'un dispositif de serrage de courroie (8) qui réalise une liaison entre le chariot coulissant (1) et un recouvrement plat conçu comme une membrane.

10. Dispositif de déplacement selon l'une des revendications 1 à 9, **caractérisé en ce que** l'élément élastique (12) est un ressort à lames, un amortisseur hydraulique ou pneumatique.
